(19) Europäisches Patentamt
European Patent Office
Office européen des brevets

(11) EP 2 175 585 A1

(12) EUROPEAN PATENT APPLICATION

(43) Date of publication:
14.04.2010 Bulletin 2010/15

(51) Int Cl.:
*H04L 5/00* (2006.01)

(21) Application number: 08166501.0

(22) Date of filing: 13.10.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Nederlandse Organisatie voor
Toegepast-
Natuurwetenschappelijk Onderzoek TNO
2628 VK The Hague (NL)

(72) Inventors:
• Gustafsson, Nils Anders Stefan
2612 CT Delft (NL)
• Oostveen, Job Cornelis
9752 EN Haren (NL)
• Djurica, Miodrag
3039 NA Rotterdam (NL)

(74) Representative: Hatzmann, Martin et al
Vereenigde
Johan de Wittlaan 7
2517 JR Den Haag (NL)

(54) **Cellular mobile telecommunication systems**

(57)    A cellular mobile communication system uses a plurality of sub-carriers to communicate between a base station and user equipment terminals in a cell of the base station. Each user equipment terminal uses at most part of the sub-carriers simultaneously. An operational parameter of the system is predicted by using transmission path loss factors for transmission between the base station and respective locations in the cell to predict signal to noise ratio of sub-carrier signals communicated between the base station and the user equipment terminals at the respective locations. A supportable data rate at the respective locations for the sub-carrier signal is determined from the signal to noise ratio. A needed number of sub-carriers for respective area units in the cell comprising the respective locations is determined from a ratio of a required data rate in the area unit and the supportable data rate of the location in the area unit.

EP 2 175 585 A1

**Description**

Field of the invention

The invention relates to the design and operation of cellular mobile telecommunication systems.

Background

US patent No 7,076,250 describes a method of planning and evaluating downlink coverage in a cellular mobile communication system. As is well known, a cellular mobile communication system uses a plurality of cells that cover a communication area. User equipment terminals, such as mobile telephones can be located anywhere in a cell. For each cell a base station with a transmitter and a receiver is provided, to communicate with the user equipment terminals in the cell.

The communication capacity of a cell depends on circumstances such as the number of active user equipment terminals in and near the cell and the terrain in the cell, in terms of location dependent transmission path loss between the location and the base station. Path loss and interference due to other user equipment terminals may necessitate the use of higher power transmissions. But the maximum achievable power is limited, so that path loss and interference will ultimately restrict the size of the cell that can be serviced by a base station. The effects of path loss and interference need to be accounted for in the selection of the number of base stations to service a network area. Furthermore, information about capacity may be used in dynamic control of the network. In principle the network may be managed by adding active base stations, when it is observed that an existing base station does not support the capacity that is requested in practice. But this may lead to an inefficient network, temporary shortage of capacity and/or a needless excess of active base stations.

In the operation of a cellular communications network, the number of base stations determine to a large degree the cost of the operation. In order to make the operation efficient, the number needs to be kept as low as possible, while still providing sufficient coverage and capacity. The location and configuration of base stations are selected such that they should provide coverage and/or capacity in a certain area where users are expected. In the operational practice, the times between the decision to deploy a base station and making it operationally availably can be very long, sometimes more than a year. Thus it is important to plan for an efficient network before the deployment takes place.

Therefore a method of predicting cell coverage and capacity is desirable. One known method uses simulation of operation of a cell or a network of cells. During simulation a configuration of locations of active user equipment terminals is selected, interference power is determined and transmission power settings are adapted to a level needed to transmit data. This is repeated for a large set of configurations, with different numbers of user equipment terminals and different spatial distributions of the terminals. As a result simulation is slow. This makes it unsuitable for interactive or real-time use.

US patent No 7,076,250 describes a method wherein the prediction by simulation is replaced with analytic computation. A transmission power level is computed that would be needed in a base station to communicate with the user equipment, based on a comparison of a desired signal to noise ratio and an estimated signal to noise ratio at the user equipment in various locations in the cell. For the prediction the signal to noise ratio at a location "p" in a cell is assumed to be inversely proportional to

$$\mathrm{Lp*(N+Iop+Ixp)}$$

Herein Lp is the transmission path loss between the base station and the user equipment at the location p, N is the thermal noise power, Iop is the power of intra cell interference noise at the location p and Ix is the power of interference noise level from other cells at the location p.

US 7,076,250 uses the predicted signal to noise ratio for the location p to estimate the transmission power Pp needed for a single user equipment terminal at the location p to achieve the desired signal to noise ratio SNR. At each location p there may be a plurality of Np user equipment terminals, and the base station needs to transmit a total amount of power to the location in proportion to that number. Thus the transmission power of the base station is proportional to

$$\mathrm{SNR * Sum \{ Np*Lp*(N+Iop+Ixp) \}}$$

In this formula the sum is taken over locations p in the cell. Additional power may be needed to be added to account for pilot signals. By comparing the computed transmission power level with the maximum available level of the base station it can be detected whether the cell capacity is exceeded. Also, it is possible to determine the maximum number of users that can be supported.

Related techniques are disclosed in US patent Nos 7,103,361 and 6,985,735. US 6,985,735 determines link power budgets and noise rise values. A link power budget is the excess power available over the minimum needed power level to communicate with respective locations in a cell in the absence of communication loads. A noise rise value indicates how much of the link power budget is lost due to communication load. User equipment terminals have a limited power budget. At locations where the noise rise exceeds the link power budget no reliable communication is possible.

US 6,985,735 predicts noise rise values from the numbers of users at various locations. The predictions make it possible to predict the range of locations covered by the base station from the locations where the link power budget exceeds the noise rise value.

US 7,103,361 computes communication capacity by computing increases of noise rise due to successively added message traffic until the link budget has been consumed.

None of these documents takes account of the effect of sub-carriers in the communication signals. In a communication system wherein a plurality of sub-carriers is available a variable number of sub-carriers may be allocated to user equipment. A base station may transmit and/or receive signals on all these sub-carriers simultaneously. On the other hand, any one user terminal may use only a sub-set of this total number of sub-carriers simultaneously. As a result, the amount of transmit power per sub-carrier can be increased in inverse proportion to the number of sub-carriers that is used by the user terminal, without exceeding the maximum achievable transmit power of the user terminal. This may result in wider cell coverage. On the other hand, the required data rate for the user terminal implies a lower limit on the number of sub-carriers that must be simultaneously used by the user terminal. The cited documents do not disclose any method to predict the effect of sub-carrier use other than by simulation.

Summary

Among others it is an object to provide for a method of adapting the design of a cellular mobile communication system wherein the effect of selective use of sub-carriers is accounted for without requiring simulation and/or to predict the effect network configurations changes and traffic levels on the number of base stations that is needed, wherein the effect of selective use of sub-carriers is accounted for without requiring simulation

A method according to claim 1 is provided. Herein transmission path loss factors for transmission between the base station and respective locations in the cell is used to predict signal to noise ratio of sub-carrier signals communicated between the base station and the user equipment terminals at the respective locations. The signal to noise ratios are used to determine supportable data rates for the sub-carrier signal at the respective locations. From the supportable data rate the needed number of sub-carriers for a location is determined.

Thus, instead of using only link power budget and noise rise, the numbers of sub-carriers needed for different area units are used as a measure of capacity. The needed number of sub-carriers may be used to determine whether the base station is capable of supporting the services supply by the cellular mobile communication system without systematic problems.

Brief description of the drawing

These and other advantageous aspects will become apparent from a description of exemplary embodiments using the following figures.

Figure 1    schematically shows a cellular mobile communication system
Figure 2    shows a flow-chart of uplink capacity computation
Figure 3    shows a graph of data rate versus signal to noise ratio
Figure 4    shows a flow-chart of uplink capacity computation

Detailed description of exemplary embodiments

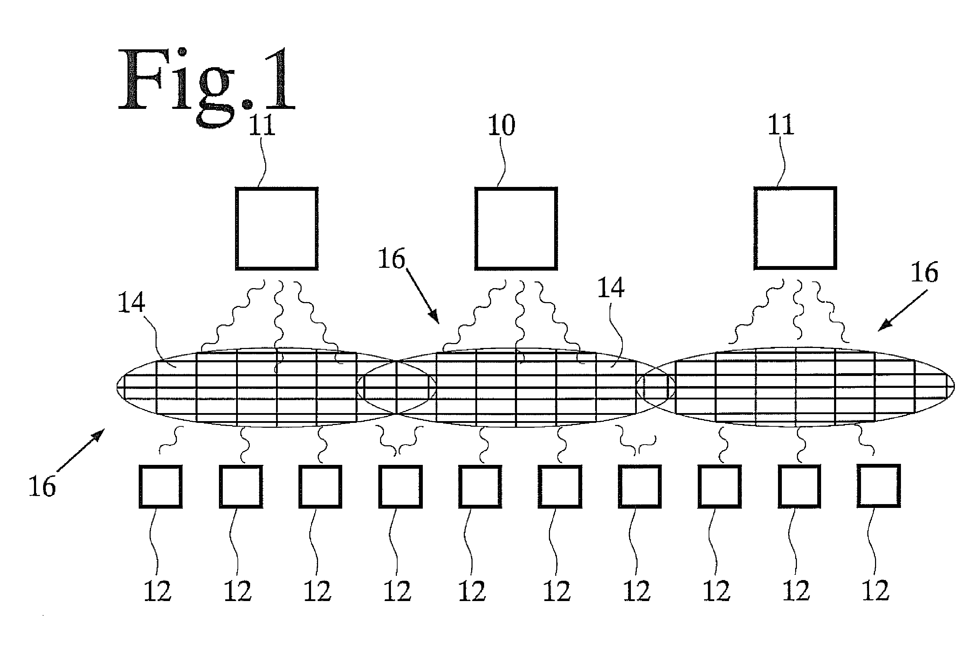

Figure 1 schematically shows a telecommunication system comprising base stations 10, 11 and user terminal equipment 12 located within a cell 16 that is covered by one of the base stations 10. By way of example, only three base stations 10, 11, with their corresponding cells 16 are shown, but many more will typically be present. Cells 16 are shown divided into area units 14. Area units play no role in normal operation, but they are introduced as a concept for the sake of capacity prediction.

When the user terminal equipment 12 communicates in uplink mode, from user terminal equipment 12 to a base station 10, user terminal equipment 12 transmits signals, which are received at the base station 10 attenuated due to path loss. It is necessary that there is at least a predetermined signal to noise ratio between the received signals from user terminal equipment 12 and "noise" due to interference from other user terminal equipment in the same cell or in other cells and other noise sources such as thermal noise. The thermal noise may be measured and taken as a constant equal to a measured value, and the path loss, which varies dependent on the location of the user equipment, may be estimated for various area units 14, or measured at the location of the cell.

Given these quantities one may estimate the transmit power needed to achieve sufficient signal to noise ratio. The resulting transmit power depends on location in the cell, due to the location dependence of the path loss. It is necessary that the transmit power for all area units in a cell remains below the maximum achievable transmit power from individual user terminal equipment. Otherwise the cell is too large for reliable communication.

In addition the number of sub-carriers used in an area unit 14 may vary and these variations may affect cell coverage.

The user terminal equipment 12 and the base stations 10, 11 are configured to communicate using a plurality of sub-carriers for example sub-carriers of an OFDM signal (OFDM=Orthogonal Frequency Division Multiplexing, which is known per se). At each base station a total number S of sub-carriers is available. On the other hand, any one user terminal 12 may use only a sub-set of this total number of sub-carriers. As a result, the amount of transmit power user per sub-carrier can be increased in inverse proportion to the number of sub-carriers that is used by the user terminal 12 without exceeding the maximum achievable transmit power of the user terminal 12.

The data rate of data carried by the sub-carrier may be adapted to the signal to noise ratio for the sub-carrier: an error correcting code with a higher redundancy rate may be used if the signal to noise ratio is lower. In an embodiment, the modulation scheme may also be changed dependent on the signal to noise ratio: at lower signal to noise ratios BPSK may be used, at higher signal to noise ratios QPSK may be used and at even higher signal to noise ratios increasingly refined QAM modulation may be used.

At the same time, dependent on the code rate and the modulation scheme, the required data rate for the user terminal 12 implies a lower limit on the number of sub-carriers that must be simultaneously used by the user terminal 12.

User equipment terminals 12 may communicate with base stations 10, 11 to provide a plurality of classes of service. Examples of service classes are a voice communication service, a high-quality data service, a best-effort data service (tolerant for errors, such as a video service). Each service class has an associated target data rate Rk. When a user terminal 12 uses a single class of service, its target data rate Ru is the target data rate of that class. When a user terminal 12 uses a combination of services, its target data rate Ru may be a sum of the target data rates for the individual services from that combination. This can be translated in an average target data rate Rp per area unit at a location "p" in the cell by multiplying the average target rate per user terminal with the average number Np of user equipment terminals per area unit.

On the other hand, a data rate Rsc per sub-carrier depends on the signal to noise ratio SNR(p) for signals from the location p, as a result of adaption of the modulation rate and/or modulation scheme. The number Mp of sub-carriers needed to support the average target data rate Rp at a location follows from the ratio Rp/Rsc. The average target data rate Rp can be supported if the sum of the required numbers Mp of sub-carriers, summed over all locations p in the cell does not exceed the total number of available sub-carriers S.

A cell size may be selected in a process wherein each area unit (also called pixel) in the cell is assigned a respective number of sub-carriers needed for uplink transmission dependent on the location of the area unit in the cell and the cell size is iteratively updated until the sum of the numbers of sub-carriers for respective area unit locations does not exceed the total available number of sub-carriers. It should be emphasized, that the area units are used as a conceptual instrument in this calculation, although individual area units cannot be identified in normal operation.

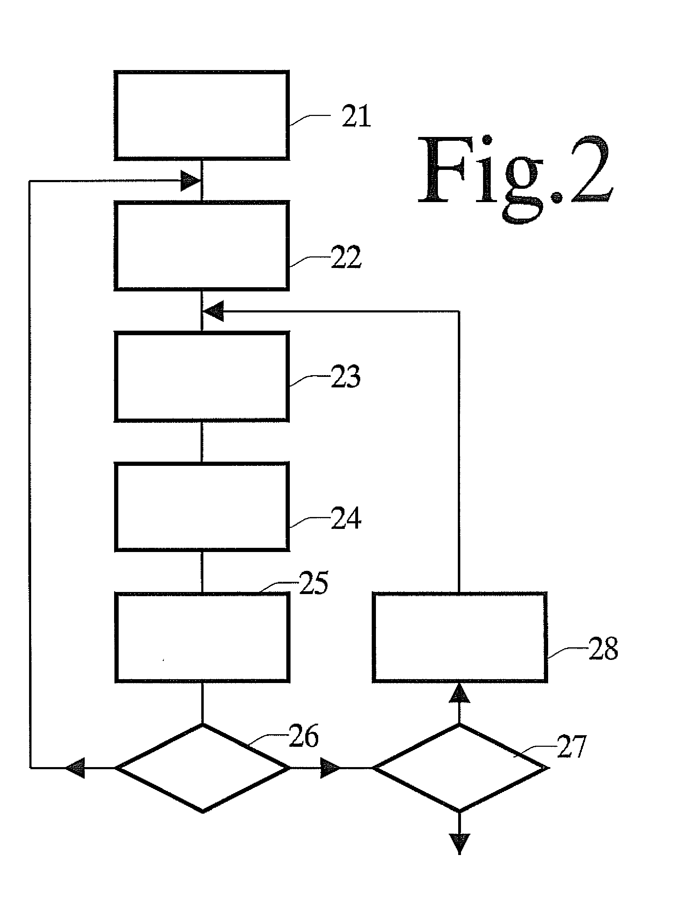

Figure 2 shows a flow chart of a process to determine uplink capacity. In a first step 21 path loss coefficients for transmission from locations in the cell are input. In an embodiment, the path loss coefficients Lp may be obtained using measurements of transmission between the locations "p" and a prospective base station location. In another embodiment, path loss may be measured between the locations "p" and reference location or locations and the path loss coefficients Lp may obtained from this measured path loss by multiplying with a factor that accounts for differences between the distance to the prospective base station location and distances to the reference location or locations. In another embodiment, part or all of the path loss coefficients may be obtained based on the distance between the respective locations and the base station location. The transmission path loss Lp may include factors for propagation loss due to the distance, penetration loss through walls, antenna gain etc.

In a second step 22, each of the pixels (area unit) is assigned an initial number Sp of sub-carriers. In an embodiment a minimum allowable value of Sp is used, corresponding to the number of sub-carriers to support communication from a user equipment terminal 12 in an unloaded network. In a third step 23, information determinative of signal to noise ratio for each of the locations is computed from the path loss coefficients and the assigned number of sub-carriers. The following formula may be used:

$$SNR(p) = P \, / \, [ \, Sp * Lp * (N + I)/S \, ]$$

Herein SNR(p) is the signal to noise ratio for a location "p" in the cell, P is the maximum achievable transmit power for a user equipment terminal 12, Sp is the number of sub-carriers assigned to the area unit of the location, Lp is the transmission path loss from the location to the base station, N is the thermal noise power and I is the interference power at the base station, which may both be measured over the full signal bandwidth and S is the total number of available subcarriers. In an embodiment the interference power may be determined by summing average user terminal power from a plurality of area units, each divided by a path loss factor from that area unit to the location p. In this computation, the average user terminal power may be obtained by multiplying user terminal density in a area unit with average power transmitted per user equipment terminal.

In a fourth step 24 the available data rate per sub-carrier of user equipment 12 at the location is determined from the signal to noise ratio. In actual operation of the communication system the data rate for individual sub-carriers depends discretely on the coding rate and/or modulation scheme, which is selected for the sub-carrier dependent on the signal to noise ratio. In fourth step 24, the average result of these selections is condensed in a function F(SNR(p)) that maps signal to noise ratio to average data rate.

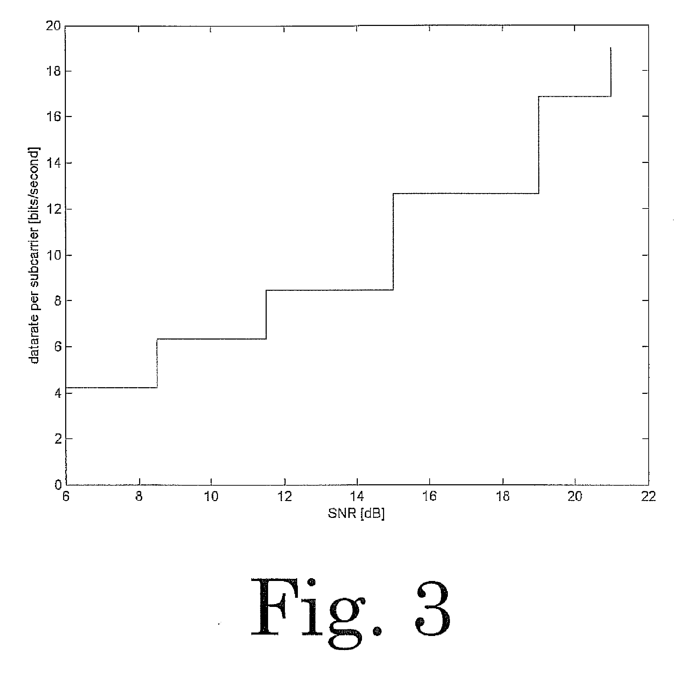

Figure 3 shows an example of such a function F(SNR(p)). The available data rate per sub-carrier is plotted vertically and signal to noise ratio is plotted horizontally. As can be seen the data rate increases as the SNR increases. Any one of a number of different definitions of data rate may used, depending on how the user requirements are defined. For instance, the data rate could be defined on the IP layer. In this case, the function F also accounts for the overhead of the MAC and IP layers. In case of a Time Division Duplex system, the function F should also account for the ratio between transmission time used for the uplink and for the downlink. A look up table memory may be used to obtain function values. The look up table may indicate the minimum signal to noise ratios for respective data rate values. In a fifth step 25 the available data rate per sub-carrier is used to compute the average number of sub-carriers needed at the location, by dividing a target data rate Rp for the location by the available data rate per sub-carrier.

In a sixth step 26 it is tested whether the sum of the needed number of sub-carriers of fifth step 25 for all area units in the cell does not exceed the total number of sub-carriers S. If not, the cell size may need to be reduced in an optional ninth step 29, after which the process may repeat from second step 22.

If the sum does not exceed the total number of sub-carriers S, a seventh step 27 is executed, wherein it is tested whether for any location the needed number of sub-carriers computed in fifth step 25 exceeds the number Sp of sub-carriers assigned to that location. If so, an eight step 28 is executed, to increase the number Sp of sub-carriers assigned to the locations where the needed number of sub-carriers exceeds the assigned number. In an embodiment, the assigned number for these locations may be set to the computed number of fifth step 25. After eight step 28, the process repeats from third step 23. Optionally seventh and eight step 27, 28 may be performed before sixth step 26.

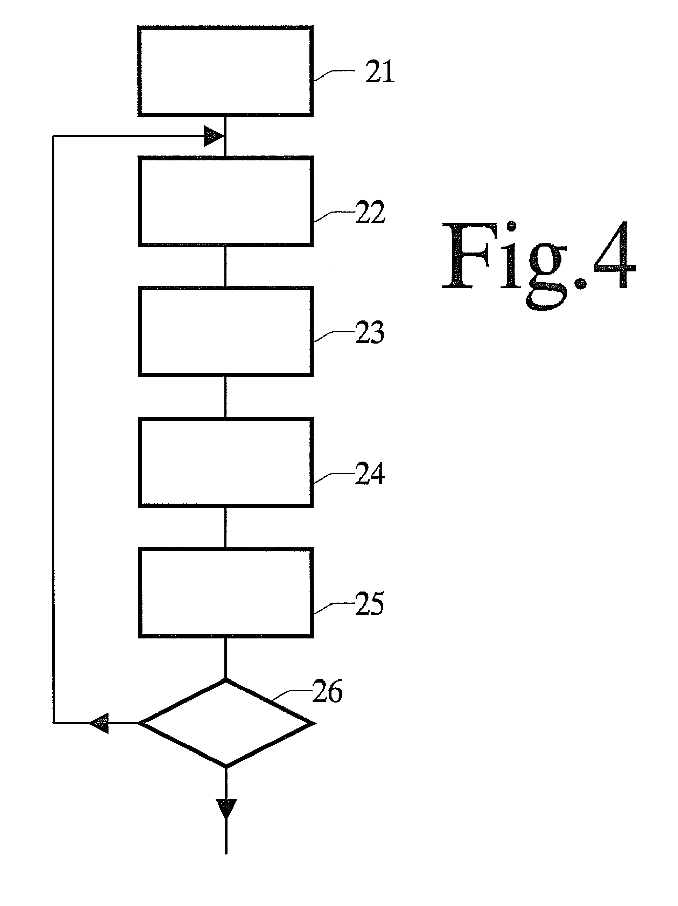

Figure 4 shows a flow chart of a process to predict whether the cell is able to support downlink capacity. The steps are similar to those of the flow chart of figure 2, except that no adjustment of the assigned number of sub-carriers is used and a different method of computing signal to noise ratio at a location "p" is used in third step 23. A formula of the following type may be used:

$$SNR(p) = Pi \, / \, [ \, Lp(i) * (N/S + Sum \, Pj/ \, Lp(j)) \, ]$$

Herein Pi is a power allocated per sub-carrier in base station 10, N is the thermal noise power in the whole signal bandwidth, S is the number of available subcarriers in the signal bandwidth, Lp(i) is the transmission path loss between the base station and the location p, Lp(j) is the transmission path loss between other base stations (indexed by "j" ) and the location, and the sum is taken over the other base stations which use the same carrier frequency. In an embodiment power from base stations with power contributions below a threshold may be omitted from this sum. It will be recalled that transmission path loss may include factors for propagation loss due to the distance, penetration loss through walls, antenna gain etc.

When the computation indicates that numbers of sub-carriers needed per location in the cell, summed over the locations exceeds the total available number of sub-carriers S, the cell size is reduced and the process is repeated.

The processes of the flow-charts of figures 2 and 4 may be executed in combination to account for both uplink and downlink. Alternatively, only one of the processes may be executed, for uplink only or for downlink only, corresponding predictions for the other form of transmissions being made without accounting for sub-channelization.

As may be noted the prediction of the number of sub-carriers that will be needed at a location is based on an expected number of user equipment terminals at a location and path loss Lp between the location and the base station.

For the downlink prediction use may be made of information about the selected frequency re-use scheme, the transmit power of the base station per sub-carrier, the density of user equipment terminal per area unit and an average data rate required per user equipment terminal. For the uplink prediction use may be made of information about the selected frequency re-use scheme, the maximum achievable power of the user equipment terminal, the density of user equipment terminal per area unit and an average data rate required per user equipment terminal.

In an embodiment expected number of user equipment terminals may be selected based on a density value of user equipment terminals per area unit that is independent of position in the cell. Thus a simple prediction process is realized. Typically, the density will depend on the type of area covered by the cell. Thus, the density may be set higher for an urban area than for a rural area, and/or the density for a business district may be set higher than for a sub-urban area. In an embodiment a density that depends on location within a cell may be used to predict the number of sub-carriers that will be needed at a location and/or the interference power that has to be expected. In an embodiment, the density may be adapted dependent on measurement of the number of user equipment terminals in an area unit. Thus a more accurate prediction may be realized.

Similarly, the average data rate per user equipment terminal may be adapted as a function of location. In an embodiment the average data rate may be set dependent on measurements.

Similarly, path loss Lp between a location and the base station may be measured and used in the computation of the number of sub-carriers that will be needed at a location.

Although an application has been described wherein the prediction of the needed number of sub-carriers is used to adjust cell size, which may be used in a design phase to select the number of base stations to cover an area, it should be appreciated that other applications are possible. For example, the process could be applied to monitor a safety margin of an operational base station, using measurements obtained from its existing operation, such as a number of active user equipment terminals in the cell of the base station, or path loss values and predicted margins of variation of these or other parameters as input for the computation, to predict whether the base station is near to having capacity problems. In this case, a decision may be taken to add a base station before actual capacity problems occur. In a further embodiment, the result of the computation may be used to control activation and deactivation of base stations, based on measurements of use, dependent on whether it is detected from the prediction based on the measurements that a capacity problem may occur unless an additional base station is activated, or that no capacity problem will occur when a base station is deactivated.

The described processes may be executed using a computer programmed with a program to execute the steps of one or both of the flow-charts. A computer program product such as an optical or magnetic disk, a semi-conductor memory or any other data carrier may be used to supply the program to the computer.

Although an application to cell size planning has been described, it should be realized that estimates of cell size in turn may be used for other purposes. Idealised environments may be considered together with estimates of future traffic and services. The estimation of cell sizes may take into account which cellular communications technology is used, how much band-width is available, which carrier band-width is used, and other options related to the technology such as advanced antennas. A multitude of options can be evaluated effectively and quickly by accounting for the effect of sub-carriers.

Although an example has been shown that highlights the use of numbers of sub-carriers, it should be noted that additional steps may be added that rely on more conventional link power budgets and noise rise values to determine the sized of a cell. A cell size that has initially been determined in this way may subsequently be refined using computed numbers of sub-carriers.

In the case that users are present in different environments such as urban or rural, in a quickly moving vehicle or at a fixed location, this may have an influence on the bit-rate that can be achieved for a certain SNR. Similarly, different services may have different quality requirements, such that different SNRs for a certain bit-rate are needed. These differences may be modelled by introducing additional area units representing the different combinations, but having the same geographical position. Furthermore, if users are present indoors, they will experience a higher path-loss. Again, such users can be modelled by using separate area units for indoor and outdoor users, where area units for indoor users are characterised by additional propagation path loss.

Step 22 may involve the use of an interference power. In an embodiment of the invention, the interference power is determined in a recursive fashion, repeating the steps 22 to 29 in Figure 2 or 22 to 26 in Figure 4 multiple times. For the first iteration, assumptions are made about the interference power, for example that user equipment terminals and base stations use their maximum power. After the first iteration, the estimated transmit power of user equipment terminals and base stations that do not use their full capacity can be reduced. The reduced transmit power estimates will then be used for the following iteration, and so on. If in a certain iteration the transmit power is not sufficient for reaching the desired bit-rate, it is increased again. Iterations can be stopped when the change in transmit power between two iterations is small enough.

**Claims**

1.  A method of predicting an operational parameter of a cellular mobile communication system that uses a plurality of sub-carriers to communicate between a base station and user equipment terminals in a cell of the base station, each user equipment terminal using at most part of the sub-carriers simultaneously, the method comprising

    - using transmission path loss factors for transmission between the base station and respective locations in the cell to predict signal to noise ratio of sub-carrier signals communicated between the base station and the user equipment terminals at the respective locations;
    - determining a supportable data rate at the respective locations for the sub-carrier signal from the signal to noise ratio;
    - determining a needed number of sub-carriers, needed for respective area units in the cell comprising the respective locations, from a ratio of a required data rate in the area unit and the supportable data rate of the location in the area unit.

2.  A method according to claim 1, the method comprising comparing a sum of the number of needed sub-carriers summed over all area units in the cell and comparing the sum with a total number of sub-carriers available for transmission in the cell.

3.  A method according to claim 2, comprising computing the signal to noise ratio for a location from a transmission power per sub-carrier from the base station divided by a transmission path loss from the base station to the location and a sum of noise factors including transmission power per sub-carrier from further base stations, divided by path loss from the further base stations to the location.

4.  A method according to claim 1, the method comprising selecting initial assigned number of sub-carriers for each of the area units, computing the signal to ratios for the locations each as function of the assigned number of sub-carriers for the area unit that contains the location, comparing the needed number of sub-carriers with the assigned numbers and iteratively updating the selection of the assigned numbers, and repeating the computing of the signal to noise ratios and comparing of the needed number of sub-carriers with the assigned numbers until the needed number of sub-carriers exceeds the assigned number for none of the locations.

5.  A method according to claim 4, comprising computing the signal to noise ratio for a location from a product of a maximum achievable transmission power from a user equipment terminal divided by transmission path loss from the location to the base station, the assigned number of sub-carriers of the location and a sum of noise factors including interference power at said location.

6.  A method according to claim 1, wherein the prediction of the signal to noise ratio comprises adding a measured thermal noise power to noise due to transmissions.

7.  A method according to claim 1, comprising measuring transmission path loss from respective locations in the cell and determining the transmission path loss factors from the measurements.

8.  A method according to claim 1, comprising activating and/or deactivating an additional base station based on a comparison of the predicted parameter with a threshold value.

9.  A computer program product, comprising a program of instructions for a programmable computer that, when executed by the programmable computer will cause the programmable computer to execute the method of any one of the preceding claims.

10. A cellular mobile communication system comprising a computer programmed to predict an operational parameter of future traffic in a cell of the network, using the method of any one of claims 1 to 8.

# Fig.1

EP 2 175 585 A1

Fig.2

# Fig. 3

Fig.4

# EP 2 175 585 A1

Europäisches Patentamt
European Patent Office
Office européen des brevets

## EUROPEAN SEARCH REPORT

**Application Number**

EP 08 16 6501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/031047 A1 (MALTSEV ALEXANDER A [RU] ET AL) 10 February 2005 (2005-02-10) paragraphs 42,44,48,54,67,72,84,85 ----- | 1-10 | INV. H04L5/00 |
| A | COLERI S ET AL: "Qos aware adaptive resource allocation techniques for fair scheduling in ofdma based broadband wireless access systems" 1 December 2003 (2003-12-01), IEEE SERVICE CENTER, IEEE TRANSACTIONS ON BROADCASTING, PAGE(S) 362 - 370 , PISCATAWAY, NJ, US , XP011103812 ISSN: 0018-9316 section 2 ----- | 1 | |
| A | WO 02/31991 A (BROADSTORM TELECOMMUNICATIONS [US]; LIU HUI [US]; LI XIAODONG [US]; MU) 18 April 2002 (2002-04-18) abstract pages 11,19 ----- | 1-10 | |
| A | PISCHELLA M ET AL: "Distributed resource allocation for rate-constrained users in multi-cell OFDMA networks" 1 April 2008 (2008-04-01), IEEE COMMUNICATIONS LETTERS, IEEE SERVICE CENTER, PAGE(S) 250 - 252 , PISCATAWAY, NJ, US , XP011226278 ISSN: 1089-7798 abstract sections 1-5 ----- -/-- | 1-10 | **TECHNICAL FIELDS SEARCHED (IPC)** H04L H04B H04W |

The present search report has been drawn up for all claims

| Place of search | Date of completion of the search | Examiner |
|---|---|---|
| The Hague | 10 June 2009 | Barrientos Lezcano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 08 16 6501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2004/045228 A (BROADSTORM TELECOMMUNICATIONS [US]; MEIYAPPAN PALANIAPPAN [US]) 27 May 2004 (2004-05-27) abstract paragraphs 36,50,52,83 table 1 | 1-10 | |
| A | HONG ZHANG ET AL: "Precoded ofdm with adaptive vector channel allocation for scalable video transmission over frequency-selective fading channels" IEEE TRANSACTIONS ON MOBILE COMPUTING, IEEE SERVICE CENTER, vol. 1, no. 2, 1 January 2002 (2002-01-01), pages 132-142, XP011094939 LOS ALAMITOS, CA, US ISSN: 1536-1233 abstract sections 1-5 | 1-10 | |

TECHNICAL FIELDS
SEARCHED      (IPC)

The present search report has been drawn up for all claims

| Place of search | Date of completion of the search | Examiner |
|---|---|---|
| The Hague | 10 June 2009 | Barrientos Lezcano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 2 175 585 A1**

## ANNEX TO THE EUROPEAN SEARCH REPORT
## ON EUROPEAN PATENT APPLICATION NO.

EP 08 16 6501

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2009

| Patent document cited in search report | | Publication date | Patent family member(s) | | Publication date |
|---|---|---|---|---|---|
| US 2005031047 | A1 | 10-02-2005 | EP 1652317 A1<br>WO 2005015770 A1 | | 03-05-2006<br>17-02-2005 |
| WO 0231991 | A | 18-04-2002 | AU 1162802 A<br>AU 2002211628 B2<br>CA 2424318 A1<br>CN 1470145 A<br>EP 1325659 A2<br>HK 1062364 A1<br>JP 3980478 B2<br>JP 2004523934 T<br>MX PA03003124 A<br>NZ 525133 A<br>US 7072315 B1 | | 22-04-2002<br>21-09-2006<br>18-04-2002<br>21-01-2004<br>09-07-2003<br>26-01-2007<br>26-09-2007<br>05-08-2004<br>13-12-2004<br>23-12-2005<br>04-07-2006 |
| WO 2004045228 | A | 27-05-2004 | AU 2002364698 A1<br>CA 2506205 A1<br>CN 1732698 A<br>EP 1559281 A1<br>EP 2026472 A1<br>JP 2006506014 T<br>US 2006154684 A1 | | 03-06-2004<br>27-05-2004<br>08-02-2006<br>03-08-2005<br>18-02-2009<br>16-02-2006<br>13-07-2006 |

EPO FORM P0459

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7076250 B
- US 7103361 B
- US 6985735 B